# EUROPEAN PATENT APPLICATION

(11) **EP 4 279 460 A1**
(43) Date of publication of application: **22.11.2023**
(21) Application number: 22173894.1
(22) Date of filing: 17.05.2022
(51) Int. Cl.: C03C 17/34, C03C 17/25, C03C 17/30, C03C 17/32, G02B 1/10, C09D 5/00, C09D 5/16, C03C 17/42, H01L 31/0216, B01J 35/00, C03C 17/00

(54) **MULTIFUNCTIONAL SELF-CLEANING NANO COATING**

(71) Applicant: Kaunas University of Technology, 44249 Kaunas (LT)
(72) Inventor: Rackauskas, Simas, Kaunas (LT)
(74) Representative: Klimaitiene, Otilija

(57) **Abstract**

The invention discloses a multifunctional self-cleaning nano-coating (MSCN nano-coating). The MSCN coating (1) is intended for covering solar cells, window panes and other transparent functional surfaces. The MSCN coating (1) structure is multilayer, with the base-layer (3) comprising a micro-roughness polymer, which may then be coated with one or more functional layers (4), and the top-layer (5) coated with a nano-roughness surface that is hydrophobic. Polymers are used as surface binders, and small amounts of functional materials that change the surface properties are possible. The MSCN coating (1) can be carried out in a factory where a special liquid is prepared from which the multifunctional coating is formed with special equipment suitable for uniform coating of large areas. This MSCN coating (1) reduces surface reflections, has hydrophobicity, photocatalytic and anti-electrostatic properties, thus improves the functional characteristics of coated surfaces (solar cells and window panes) and simplifies their mainenance.

## Description

### FIELD OF INVENTION

The invention relates to coating technologies, more particularly, to a multifunctional self-cleaning nano-coating for solar cells, window panes and other hard transparent surfaces. Nano-coating reduces reflections, has hydrophobicity and anti-electrostatic properties, thus improving functional properties and simplifying maintenance of surfaces.

### BACKGROUND ART

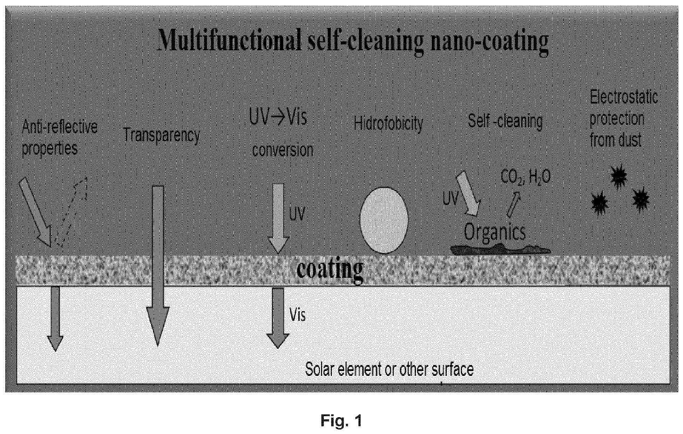

Window panes and solar cell surfaces may be coated with functional coatings to enhance their performance. Coatings may have properties (Figure 1) which:
- improve light transmission of the surface layer of a window or solar cell;
- block ultraviolet (UV) rays;
- reduce surface reflections;
- increase the hydrophobicity of surfaces;
- improve anti-electrostatic properties by preventing the accumulation of dust and plaque on the surface;
- is resistant to mechanical and climatic effects.

**Light transmission and reflections in coatings.** Photon flux control at the nanoscale is important to minimize reflection in a variety of technologies, such as photovoltaics, light emitting diodes (LEDs), photocells, and photocatalysis. With the exception of mirrors, reflection from the surface is usually undesirable because it causes light loss. Therefore, anti-reflective layers and coatings are used, which are divided into layered and gradient.

The performance characteristics of anti-reflective coatings are: reduced reflection over a wide wavelength of light, reduced dependence of the reflection on the angle of incidence of light, and neutrality for the polarization phenomenon.

Layered coatings reduce almost all reflections from the surface, but they are not easy to employ because of the need to find or select materials with the right refractive index and transparency, to properly control the thickness of the coating layers, and the surface coating process is costly.

Gradient layers with a nano-structured surface do not have these disadvantages. One possible such material is zinc oxide (ZnO), whose morphology of nanostructures, depending on the conditions of the synthesis, can be both nanotubes and nanospheres, nanoboxes, hexagons, tripodes, tetrapods and other specific structures. The potential of this material in the anti-reflective layers is demonstrated by ZnO nanowires coatings, which increase the energy generated by the solar cell by reducing the reflection of incident light on the cell surface. The unique structure of ZnO nanotetrapod particles, which consists of four one-dimensional nanotubes, is receiving more attention from scientists. These non-spherical structures have the property of scattering transmitted light, and this property is widely applied in the fields of photonics and optoelectronics.

**Anti-electrostatics and hydrophobicity of coatings.** Most self-cleaning coatings clean either from organic matter (often hydrophilic coatings) or reduce adhesion (hydrophobic coatings). Electrostatic dust protection is sometimes used in addition.

There is no coating that is multifunctional and cleans from all of the above types of matter. The object of the present invention is to avoid the drawbacks or limitations observed in the solutions reviewed above, to achieve more efficient coating characteristics, as well as a complex combination of different properties, which is not the case in known coatings.

Depending on many factors, in a dusty environment, the surface of a solar cell can accumulate 80-300 mg of dust per square meter per day, and 100 mg of dust per square meter reduces the efficiency of a solar cell by 0.4-0.7%. Exposed to environmental dust for one month, a polluted solar cell can usually produce only 85% of the total amount of electricity it can produce when clean. The annual losses of electricity generation caused by this trend of surface contamination of solar cells range from 1.5% to 6.2%, depending on the location of the solar power plant. After light rain, the efficiency of some solar cells improves, but others deteriorate even more. The surface of solar cells is also covered by organic pollution: biofilms of bacteria, algae, lichens, moss, or fungi.

Studies show that in the most polluted regions, such as the metropolitan areas of eastern China, annual solar energy production is on average lower at 1.5 kWh / m2, which corresponds to a reduction of around 35% compared to unpolluted regions.

Solar cells are coated with coatings to reduce cleaning costs, and here nano-coatings are extremely effective because they reduce the adhesive forces of pollutants and dust. Also, various anti-reflective coatings are used, thus increasing the amount of light entering the solar cell (increasing its efficiency), but there are no known coatings that effectively address both cleaning and light transmission / reflection issues. Most self-cleaning coatings clean either from organic materials (often hydrophilic coatings) or reduce the adhesion of materials (hydrophobic coatings), sometimes with the additional use of electrostatic protection against dust. There is no such thing as a multifunctional coating that cleans in all of the above ways. Other important properties: extremely high hydrophobicity (water contact angle above 150°), protection against dust, blocking UV rays, protection against bird impact, also not comprehensively solved.

**Prior art documents.** There are patent and non-patent documents describing various coatings, as well as methods and means for the production and implementation of such coatings.

U.S. Pat. No. US8553333B2 (Priority date 2009-01-23) describes an antireflective coating based on zinc oxide (ZnO) nanoparticles, and a system and method for performing chemical deposition, especially of antireflective films. These systems typically include a micromixer and a microchannel applicator. The deposition material or materials are applied to the substrate to form a nanostructured, non-reflective coating. The uniform and oriented surface morphologies of the films deposited in the described embodiments are clearly improved compared to the films deposited in the conventional manner. In some embodiments, the polycarbonate substrate, such as a lens, is coated with a scratch-resistant, non-reflective coating. In certain embodiments, the surface of a solar catalytic microreactor for endothermic reactions is coated with an anti-reflective coating and the reactor is energized by absorbing solar radiation. The composition and morphology of the material deposited on the substrate can be adapted to the intended use. The coating process can be performed at low temperatures because no annealing is required after deposition. The coating described in this patent is intended to reduce surface reflections and enhance the surface, but does not mention the improvement of other properties of the modified surface.

Another U.S. Patent No. US8465718B2 (Priority date July 26, 2007) discloses a nano / micron binary powder for superhydrophobic self-cleaning purposes. The properties of the powder particles are micro-sized in diameter and nano-sized in surface roughness. In one embodiment, the powder has an average particle diameter of about 1-25 µm and an average roughness Ra of about 3-100 nm. The nano / micron binary powder can be made of silica, metal oxide, or combinations thereof. However, the coating described in this patent emphasizes only the hydrophobicity and self-cleaning properties, and the advantages of other properties are not mentioned.

One more patent document US20100259823A1 (priority date 09/04/2009) describes an anti-reflective coating which is applied on a substrate surface. The anti-reflective coating includes many essentially transparent nanostructures whose primary axis is substantially perpendicular to the substrate surface. The array of essential transparent nanostructures has a gradual refractive index. In some embodiments, each nanostructure has a substantially uniform cross-sectional area along the primary axis. Also, related methods and devices are described. The coating described in this document emphasizes the properties of reducing reflection and surface reinforcement, but does not mention the improvement or benefits of the other coating properties mentioned above.

Also, there are known close analogs and products to the present invention:
- Coating for solar cells, Solar Share (https://solarsharc.com/). This coating has insufficient wetting angle (specified >110° contact angle, https://solarsharc.com/specification/ - specified angle 107.1°) and, consequently, self-cleaning, as well as insufficient antielectrostatic and photocatalytic properties that attract dust, and insufficient cleaning of organic matter from the surface.
- Self-cleaning coating "Solar Self Maintenace Coat" (https://www.ecoshop-onlineshop-english.com/anti-fouling-coat-1/solar-self-mainte-coat/), which cleans surfaces from organic matter, however, the principle of operation of the coating is based on high hydrophilicity, so water droplets will cover the entire surface rather than slip. This coating has no effect on inorganic materials, it is only intended to reduce the frequency of surface washing, but the desired result is continuous and self-cleaning of the coating. Also, this coating does not reduce sun reflections, so it does not increase the efficiency of the solar cell, or the amount of light entering the room through the window.

**Technical problem.** The above overview of the closest prior art documents shows that multifunctional special-purpose coatings (for solar cells and exterior windows) do not exist or are not efficient enough to have a complex function of improving light transmission, UV absorption, reflection reduction and effective self-cleaning of the coating, allowing the coating to be cleaned in the usual active ways and with additional means.

### SUMMARY OF INVENTION

This invention discloses a new multifunctional surface coating and its implementation technology providing surfaces with a set of properties that improve the performance of solar cells and window panes. The use of the coating is not limited also for other transparent functional surfaces.

**Solution.** Multifunctional self-cleaning nanocoating (MSCN) is a surface coating, primarily aimed for solar panels and window glass, which incorporates several functional thin layers in order to achieve simultaneously several functions, most importantly, high transparency and self-cleaning as such, but at the same time other functions can be tuned on demand: antireflection, glare level, hydrophobicity, photocatalytic cleaning, electrostatic dust repellence and UV protection. Compared to earlier single-layer coatings for solar panels, which usually serve one purpose (antireflection, UV protection or self-cleaning separate coatings), the MSCN coating is aimed at serving several functions simultaneously, moreover they can be tuned according to demand, and use less functional material.

MSCN layer works as a transparent hydrophobic surface, partly using the lotus effect. The dust, sand soil or any other dirt, which naturally accumulate on the surface of glass or solar cell, lower its transmittance and therefore lowering the electricity generated by solar cell. In order to avoid cleaning and save on cleaning costs the proposed MSCN layer can be deposited. The dirt, accumulated on the MSCN layer do not stick and can be easily removed with small amount of water (e.g., rain) without using mechanical cleaning or special detergents. Even though MSCN is primely devoted to solar cells and glass, it can also be deposited on other transparent surfaces, such as different hard or soft polymers, plastics, acrylic glass, moreover MSCN can be also deposited on any other surface, such as wood, brick, metal, paint and it can function as a transparent protection from water and soiling, or any other functionality can be added.

The MSCN layer consists of 3 layers: base layer, functional layers and hydrophobic top-layer. Base-layer is on top of the substrate (e.g., glass), the hydrophobic layer is the top-most, and the functional layers are between the base and hydrophobic layer. In order to get MSCN functioning, at least, base-layer and hydrophobic top-layer are needed. The specific morphology is intentionally created: base-layer creates micro-roughness, to protect from mechanical impact, hydrophobic top-most layer creates hydrophobicity to keep away the water and intermediate functional layers create functions on the demand.

Employing these aspects, the functionality of MSCN can be adjusted at some extent, according to application requirements. The binders in composite, concentrations or diameters of nanoparticles can be varied, to achieve higher transparency, UV absorption, layer thicknesses. Also surface topology can be controlled in order to get the needed mechanical stability and hydrophobic properties.

### BRIEF DESCRIPTION OF DRAWINGS

The features and advantages of the invention are described in the detailed description of the invention with reference to the following drawings:
- **Fig 1.**: The list of functional features of multi-functional (MSCN) nano coatings: Anti-reflectivity, Transparency, UV blocking or UV-Vis conversion, Hydrophobicity, Self-cleaning, Anti-electrostatics.
- **Fig. 2.**: Morphology of the MSCN coating. The preparation order is followed from the top to the bottom: a) substrate to be coated, b) base layer, c) optional one or more functional layers, and d) hydrophobic layer as the top surface.

### DETAILED DESCRIPTION OF INVENTION

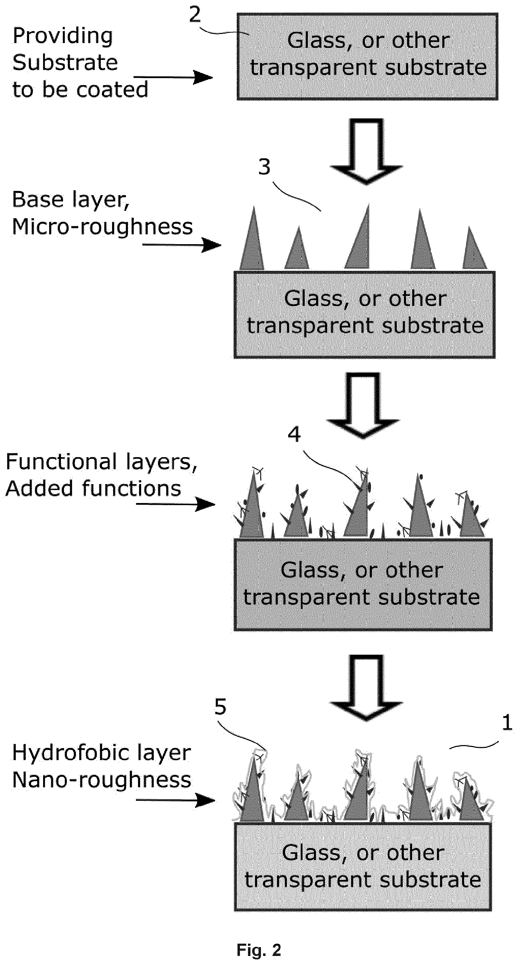

Providing to a surface micro-roughness of the coating may be implemented, to achieve mechanically stable, hydrophobic surface. As presented in Figure 2, the first layer of the MSCN coating forms micro-roughness. The second layer forms micro-nano-rougness functional layers. And the third (top-most) layer is a hydrophobic nano-rough material. A surface, prepared by so arranged MSCN coating layers, has higher hydrophobicity due to nano-roughness, and higher mechanical stability, due to micro-roughness, which protects nanoparticles from breaking and rubbing-off the surface. Such MSCN layered-topology makes the hydrophobic surface work longer, protecting it from wear-off. Also, less amounts of functional nano-particles are needed for production, since the nanoparticles are deposited only on the top-most layer, but not in the whole volume of the coating, which makes this method and MSCN coating more price-efficient.

**The base layer.** The base layer is the first layer on the substrate surface. The substrate may be glass or other transparent hard material, for example, types of transparent plastics. The base-layer creates micro-roughness, which makes the surface uneven, hilly, creates groves. Micro-roughness can be controllably made by controlling the deposition process parameters such as deposition rate or concentration. Such micro rough morphology layer protects all structure from mechanical impact, making the layer more resistant to touching by hand or cleaning. At the same time it can lower the optical reflection. Base layer can be prepared from transparent hard materials, including but not limited to polymers such as PMMA, PDMS, PVB, EVA, PC, PU or POE (having monomers of vinyl, siloxane, acrylic, ethylene, acetate, styrene, epoxy, carbamate, bisphenol or a mixture of them), other organic or inorganic transparent materials, nanoparticle (oxides of silicon, zinc, titanium) or composite materials of all named. Most likely base material is a polymer, serving as binder to the surface, forming a scaffold for further layers incorporation, increase coating mechanical strength and form a micro surface roughness.

**Functional (intermediate) layers.** Functional layers are used when a specific MSCN coating function is required by the application. Functional layers are optional in the present invention. Each functional layer can be tuned according to the need of application. Functional layers are in the form of a thin film or separate patches, using the minimal needed material for the function to take effect, in such a way, the amount of the material can be kept minimal. Functional layers can intentionally or non-intentionally integrate partly into other layers. Different functional layers can be used:
- ***electrostatic repellence.*** This functional layer conducts electricity and in such a way lowers the static electricity and lowers the attraction of dust. Conductive or semiconductive materials can be used in liquid, solution, composite form, which is deposited to the surface. Solution can comprise of nanoparticles (in a form of spheres, wires, rods, tetrapods and others), conductive polymers, carbon nanotubes, graphene, silver nanowires, ITO, FTO or a mixture of mentioned.
- ***UV absorption.*** In case the surface needs protection from harmful UV light, a UV protecting layer can be added, which absorbs or scatters UV or converts it to visible light. Nanoparticles (ZnO, TiO₂, SnO₂, or others), UV absorbing organic and inorganic materials can be deposited to serve for UV absorption.
- ***photocatalytic cleaning of organics.*** In case, the surface needs to clean organic pollution, or prevent organism such as fungus, bacteria, algae or other propagation, a photocatalytic cleaning layer can be used. Such layer consists of preferably photo-active nanoparticles (ZnO, TiO₂, SnO₂, or others) or other organic or inorganic materials.
- ***aesthetical color or pattern.*** For visual aesthetics, designing or to conceal metal strips additional layer of color or pattern can be used. Materials creating color can be used, such as organic and inorganic dyes, thin film interference layers creating color or visual patterns, other nanoparticles and composites. Artistic methods using stencils or writing and painting can be used.

**Hydrophobic layer.** The top-most layer has hydrophobic properties, repel the water, and therefore makes the dirt removal from the surface more easy. This layer comprises of hydrophobic materials, which have water contact angle higher than 90 degrees, and makes the water bead. Ideally, due to micro- and nano-roughness, the water contact angle is higher than 150 degrees (called superhydrophobic) which makes the water form beads and roll off the surface, sticking to dirt but not to the surface, in the process of self-cleaning. Moreover, superhydrophobic layer protects from icing, lowers condensation and form a more slippery surface, impairing snow or dirt to attach.

Hydrophobic materials can be hydrophobic polymers (Polydimethylsiloxane (PDMS) or its composites), fluorocarbons, graphitic structures, or the surface can be modified with self-assembled monolayers, or alkyl functional groups. The nano-roughtness of the hydrophobic layer is formed by nanoparticles, which are from underlying functional layers or from intentionally added nanoparticles, mixed with hydrophobic materials. Nanoparticles can be in a form of spheres, platelets, nanowires of tetrapods.

**MSCN coating process.** MSCN can be deposited onto the substrate surface by different thin film preparation methods, known to the specialists, including but not limited to spray-coating, slot-die coating, dip-coating, painting, printing, blade coating or a mixture of mentioned. Most probable is spray-coating or slot-die coating of the each layer separately from their solutions. Additional processes, such as sanding, engraving or brushing can be used on the deposited layer in order to control its morphology.

MSCN coating preparation is done in a series of steps, depending on the amount of different layers needed, morphology of each step is intentionally controlled by process conditions. The preparation MSCN coating (1) preparation order (as shown in Figure 2) is followed from the top to the bottom:
a) providing substrate surface (2),
b) coating the base-layer (3),
c) coating optional functional 1 or more layers (4), and
d) coating the hydrophobic layer as the top- layer (5).

The functionality of MSCN coating can be varied according to the demand of the application. The binders in composite, or concentrations or diameters of nanoparticles can be varied in order to achieve higher transparency, UV absorption, similarly different layer thicknesses and surface topology can be controlled in order to get the optimal mechanical stability and hydrophobic properties or according to any other functional needs, how much transmission, reflectance, glare or photocatalytic properties are needed. Such topology makes hydrophobic surface work longer, protecting it from wear-off, also less amounts of functional nanoparticles are needed since they are deposited only on the top-most layer and not in the whole volume of the coating, which makes this layer more price-effective.

**Advantages, compared to single-layered coatings.** The advantages are the following:
- possibility to tune properties of each layer separately, and make the needed functionality of the MSCN coating on demand;
- less waste of the material, since the materials are not intermixed, but layered, the amount of needed material is minimized to one thin layer. This is especially important for the functional layers which work best as a layer, namely, the conductive layer and the top-most hydrophobic layer.
- optimal mechanical stability, as the stability depends on the base-layer material and morphology, adding other functional layers does not affect the overall strength. If functional materials would be mixed with base materials and deposited in one layer, changing any component for functionality would drastically change the overall mechanical and other properties.

**Embodiments of the invention.** The below provided 3 embodiments are provided as examples of the disclosed MSCN coating. However, there may be more embodiments comprising one or more different functional layers between the base-layer and top-layer.

**The minimal MSCN coating.** The minimal MSCN coating is with the base-layer and the hydrophobic top-layer. Surface prepared in this sequence:
- the base-layer (3) is made from polymer (PMMA, PDMS, PVB, EVA, PC, PU or POE) in appropriate solvent (ethanol, isopropanol, ethyl acetate, acetone or other), spray deposited on the surface.
- Next, the top-layer (5) of siloxane polymer, with a mixture of SiO₂ nanoparticles is deposited, which are needed for nano-roughness.

Such composition has high hydrophobicity due to nano-roughness, and also high mechanical stability, due to micro-roughness. The top-most hydrophobic layer (5) lowers dirt accumulation, makes water form beads and self-clean the surface.

This MSCN coating embodiment is most cost effective, as minimal coating functions and materials are used. However, there are no additional MSCN functions included, therefore, this type of coating can be used in the most clean areas.

**Dust-repelling MSCN coating.** MSCN coating with a mechanically stable, superhydrophobic surface, repelling dust. The base-layer forms micro roughness, the second layer, which is a functional layer, has electrostatic dust repellency, and the top-most layer with nano-level roughness is the hydrophobic layer.

The surface prepared in this sequence:
- the base-layer (3) is made from polymer (PMMA, PDMS, PVB, EVA, PC, PU or POE) in appropriate solvent (ethanol, isopropanol, ethyl acetate, acetone or other), spray deposited on the surface.
- Next, for a functional layer (4), carbon nanotube solution is sprayed, controlling the resistance of the surface to be in the 10⁻⁶ - 10⁻¹² ohms range.
- Lastly, the top-layer (5) of siloxane polymer is deposited.

Such three-layered composition has high hydrophobicity due to nano-roughness, and also high mechanical stability, due to micro roughness, which protects carbon nanotubes from breaking and rubbing-off the surface. The top-most hydrophobic layer (5) lowers dirt accumulation, and makes water form beads and self-clean of the surface.

Such MSCN coating embodiment is most suitable for the solar cells, allocated in the areas with high dust, for example, near industrial areas, in cities, or in desert areas.

**MSCN coating with protection from organic pollutants.** MSCN coating with a photocatalytic functional layer to protect from algae, and dissociate the organic pollutants, blocks UV light.

The surface of the substrate is prepared in this sequence:
- The base layer (3) is made from polymer (PMMA, PDMS, PVB, EVA, PC, PU or POE) in appropriate solvent (ethanol, isopropanol, ethyl acetate, acetone or other), spray deposited on the surface.
- next, for the functional layer (4), ZnO (or TiO₂, SnO₂) nanoparticle solution is sprayed, controlling the transparency to be higher than 80% in visible range.
- lastly, the top-layer (5) of siloxane polymer is deposited.

Such composition has high hydrophobicity due to nano roughness, and also high mechanical stability, due to micro roughness. Top-most hydrophobic layer (5) lowers dirt accumulation, makes water form beads and self-clean the surface. Functional layer (4) dissociates organic pollutants.

Such MSCN embodiment is most suitable for the solar cells in the areas with extremely high humidity, for example, long rain intervals or long intervals without sun, or frequent shower rains.

### MSCN coating with protection from organic pollutants and UV protection

MSCN coating with a photocatalytic functional layer to protect from algae, dissociate the organic pollutants and block UV light at the same time

The surface of the substrate is prepared in this sequence:
- The base layer (3) is made from polymer (PMMA, PDMS, PVB, EVA, PC, PU or POE) in appropriate solvent (ethanol, isopropanol, ethyl acetate, acetone or other), spray deposited on the surface.
- next, for the functional layer (4), ZnO tetrapod solution is sprayed, controlling the transparency to be higher than 80% in visible range.
- lastly, the top-layer (5) of siloxane polymer is deposited.

Such composition has high hydrophobicity due to nano roughness, and also high mechanical stability, due to micro roughness. Topmost hydrophobic layer lowers dirt accumulation, makes water form beads and self-clean the surface. Functional layer dissociates organic pollutants and protects from UV light.

Such MSCN embodiment is most suitable for the solar cells in the areas with extremely high humidity, for example, long rain intervals or long intervals without sun, or frequent shower rains. Also such MSCN protects solar cells from UV damage.

### MSCN coating with protection from organic pollutants, UV-protection and electrostatic repelence

MSCN coating with a photocatalytic functional layer to protect from algae, dissociate the organic pollutants, block UV light and repel the dust at the same time.

The surface of the substrate is prepared in this sequence:
- The base-layer (3) is made from polymer (PMMA, PDMS, PVB, EVA, PC, PU or POE) in appropriate solvent (ethanol, isopropanol, ethyl acetate, acetone or other), spray deposited on the surface.
- next, functional layers (4) are sprayed in any sequence, but preferably:
   ∘ first, carbon nanotube solution is sprayed, controlling the resistance of the surface to be in the 10⁻⁶ - 10⁻¹² ohms range.
   ∘ Second, ZnO (or TiO₂, SnO₂) nanoparticle solution is sprayed, controlling the transparency to be higher than 80% in visible range.
- lastly, the top-layer (5) of siloxane polymer is deposited.

Such composition has high hydrophobicity due to nano roughness, and also high mechanical stability, due to micro roughness. Topmost hydrophobic layer lowers dirt accumulation, makes water form beads and self-clean the surface. Functional layers dissociate organic pollutants, protect from UV light and repel dust.

Such MSCN embodiment is suitable for the most solar cells, have most needed functionalities, so it would be preferable for the most solar cells as the top product.

### MSCN coating with protection from organic pollutants, UV blocking or converting to visible light

MSCN with a photocatalytic functional layer to protect from algae, and dissociate the organic pollutants and blocks UV light or converts UV to visible light at the same time.

The surface of the substrate is prepared in this sequence:
- The base layer (3) is made from polymer polymethylmethacrylate (PMMA) in appropriate solvent, preferably ethyl acetate (concentration 1-50 mg/ml). The coating is deposited by spray coating on the surface. The thickness of the layer 1-50 micrometers.
- next, for the functional layer (4), ZnO nanoparticle solution in isopropanol (1 to 100 mg/ml) is sprayed, controlling the transparency to be higher than 80% in visible range.
- lastly, the top-layer (5) of polysiloxane polymer solution (1-99 %vol) is deposited. Thickness controlled by transparency to be higher than 80% in visible range.

Such composition has high hydrophobicity due to nano roughness, and also high mechanical stability, due to micro roughness. Top-most hydrophobic layer (5) lowers dirt accumulation, makes water form beads and self-clean the surface. Functional layer (4) dissociate organic pollutants, protect from UV light or partly converts UV light to visible.

Such MSCN embodiment is suitable for the most solar cells, have functionalities which increase the efficiency of solar harvesting and guards from UV damage, so it would be preferable for the most solar cells.

### NON-PATENT LITERATURE

[1] Coating for solar cells "Solar Sharc" (https://solarsharc.com/);
**[2]** Self-cleaning coating "Solar Self Maintenace Coat": https://www.ecoshop-onlineshop-english.com/anti-fouling-coat-1/solar-self-mainte-coat/
[3] LIN, C.A. - TSAI, M.L. - WEI, W.R. - LAI, K.Y. - HE, H. Packaging glass with a hierarchically nanostructured surface: A universal method to achieve self-cleaning omnidirectional solar cells. In ACS Nano . 2016. Vol. 10, no. 1, p. 549-555.

## Claims

1. A multifunctional coating (1) for hard transparent substrates, preferably, surfaces of solar panels, window panes, greenhouse glasses, the coating **comprising** at least two layers, wherein
• the lowest base-layer (3) coated onto the substrate (2) providing micro-roughness,
• the top-most layer (5) coated onto the lower layer or layers providing a hydrophobic material coated with nano-roughness;

2. The coating according to claim 1, **characterized in that** further it comprises one or more intermediate layers (4), between the lowest base-layer (3) and the top-most layer (5), wherein said one or more intermediate layers (4) are configured to provide for the coating any one or a combination of additional functions:
• electrostatic repellence;
• UV absorption or conversion to visible light;
• photocatalytic cleaning of organics;
• color or pattern.

3. The coating according to claim 1, **characterized in that** the base-layer (3) is prepared from transparent hard materials, including but not limited to:
• polymers such as PMMA, PDMS, PVB, EVA, PC, PU or POE, having monomers of vinyl, siloxane, acrylic, ethylene, acetate, styrene, epoxy, carbamate, bisphenol or a mixture of them;
• other organic or inorganic transparent materials;
• nanoparticle: oxides of silicon, zinc, titanium;
• or composite materials of all named.

4. The coating according to claim 1, **characterized in that** the top-layer (5) is prepared from hydrophobic polymers, such as polydimethylsiloxane (PDMS) or its composites, fluorocarbons, graphitic structures, or the surface can be modified with self-assembled monolayers, or alkyl functional groups.

5. The coating according to claim 2, **characterized in that** electrostatic repellence functional layer by any one of intermediate layers (4) comprises composite comprising nanoparticles in a form of spheres, wires, rods, tetrapods and others, conductive polymers, carbon nanotubes, graphene, silver nanowires, ITO, FTO or a mixture of mentioned.

6. The coating according to claim 2, **characterized in that** UV absorption functional layer by any one of intermediate layers (4) comprises nanoparticles of ZnO, TiO₂, SnO₂, or others, UV absorbing organic and inorganic materials can be deposited to serve for UV absorption.

7. The coating according to claim 2, **characterized in that** photocatalytic cleaning of organics functional layer comprises photo-active nanoparticles, of preferably, ZnO, TiO₂, SnO₂.

8. The coating according to claim 2, **characterized in that** aesthetical color or pattern functional layer comprises organic and inorganic dyes, thin film interference layers creating color or visual patterns, other nanoparticles and composites.

9. The coating according to claims 1 and 2, **characterized in that** thickness of each layer is in the range from 1 nanometer to 100 micrometers.

10. A method for producing the surface coating (1) according to claims 1 to 9, **comprising** steps, for producing any of base-layer (3), functional layer (4), hydrophobic layer (5), any one or a combination of spray-coating, slot-die coating, dip-coating, painting, printing, blade-coating, wherein the most preferred are spray-coating or slot-die coating of the each layer separately, deposited from their solutions.

11. The method according to claim 10, **characterized in that** further sanding, engraving or brushing is used on the deposited layer, to control the layer's surface morphology.

12. The method according to claims 10-11, **characterized in that** the method comprises the following steps and configurations:
• Providing substrate (2), preferably, glass surface;
• Cleaning the substrate (2) from dust, organic and inorganic contaminants,
• Coating the base-layer (3) by spray coating or slot-die coating in the tolerance range of 0.1 micron to 100 micron;
• Processing the base-layer (3) if needed with heating or mechanical processing such as sanding, engraving or brushing;
• Coating functional layers (4) by spray coating or slot-die coating in the tolerance range of 1 nanometer to 50 micrometers;
• Processing the functional layers (4) if needed with heating or mechanical processing such as sanding, soft wiping;
• Coating the top-layer (5) by spray coating or slot-die coating in the tolerance range of 1 nanometer to 50 micrometers;
• Optionally, processing the top layer (5) with heating or mechanical processing such as sanding, soft wiping.

## Amended claims

### Amended claims in accordance with Rule 137(2) EPC.

1. A hard transparent substrate with a surface coating (1), the surface coating (1) **comprising** at least
• a base layer (3) of a polymer;
• a functional layer (4) deposited with ZnO-nanotetrapod-containing solution; and
• a top-layer (5) of a hydrofobic polymer.

2. The hard transparent substrate with the surface coating (1) according to claim 1, **wherein** the hard transparent substrate is glass.

3. The hard transparent substrate with the surface coating (1) according to claim 1, **wherein** the base layer (3) polymer is any one of PMMA, PDMS, PVB, EVA, PC, PU or POE.

4. The hard transparent substrate with the surface coating (1) according to claim 1, **wherein** the functional layer (4) deposited with ZnO-nanotetrapod containing solution has the transparency higher than 80% in the visible range of light.

5. The hard transparent substrate with the surface coating (1) according to claim 1, **wherein** the top-layer (5) of hydrofobic polymer is siloxane polymer.

6. A solar module, **comprising** the hard transparent substrate with a surface coating (1) according to any of claims 1 to 5.

7. A method of coating (1) a hard transparent substrate, the method **comprising** steps at least of
• providing the hard transparent substrate surface (2),
• depositing a polymer base layer (3) onto the substrate surface (2) by spraying, the polymer, which is mixed or disolved in an appropriate solvent;
• depositing a functional layer (4) with a ZnO-nanotetrapod containing solution, whereby the transparency of the layer being deposited is higher than 80% in the visible range of light; and
• depositing a top-layer (5) of hydrofobic polymer, preferably, siloxane polymer.

8. The method according to claim 7, **wherein** the base layer (3) polymer is any one of PMMA, PDMS, PVB, EVA, PC, PU or POE.

9. The method according to claim 7, **wherein** the solvent of the polymer for the base layer (3) is selected from a group of ethanol, isopropanol, ethyl acetate, acetone.
